(19) Europäisches Patentamt

European Patent Office

Office européen des brevets

(11) Publication number : **0 308 167 B1**

(12) EUROPEAN PATENT SPECIFICATION

(45) Date of publication of patent specification :
05.06.91 Bulletin 91/23

(51) Int. Cl.⁵ : **A41H 43/04**, A41D 27/02,
A41H 27/00

(21) Application number : 88308428.7

(22) Date of filing : 13.09.88

(54) Fabric to fabric bonding.

(30) Priority : 14.09.87 GB 8721581

(43) Date of publication of application :
22.03.89 Bulletin 89/12

(45) Publication of the grant of the patent :
05.06.91 Bulletin 91/23

(84) Designated Contracting States :
AT BE CH DE ES FR GR IT LI LU NL SE

(56) References cited :
EP-A- 0 119 754
DD-A- 231 484
DE-A- 3 336 536

(73) Proprietor : FABREX LIMITED
26 Station Road
Hinckley Leicestershire LE10 1AW (GB)

(72) Inventor : Buckle, James Leslie
Sutton House
Sutton-in-the-Elms Leicestershire (GB)

(74) Representative : Hallam, Arnold Vincent et al
E.N. Lewis & Taylor 5 The Quadrant
Coventry CV1 2EL Warwickshire (GB)

## Description

The present invention relates to the application of appliques made of fabric material to fabric garments such as t-shirts and jumpers.

It is well known that thermoplastics materials can be heat bonded to a variety of support materials, commonly by radio frequency bonding. This fact is used in the production of applique articles, that is, garments such as t-shirts and jumpers to which appliques made of thermoplastics material have been heat bonded. However, radio frequency bonding cannot be used to bond an applique made of fabric material to garment fabric where the fabric may be made by weaving or knitting and therefore other bonding methods have been used. Primarily, these consist of the use of different types of adhesive which have proved generally unsuccessful. Such adhesives are not easy to use, become brittle when dry and lose their adhesive properties when subject to water and heat during washing of the garments.

DD A1 231484 describes a method of welding flat-shaped textile articles which are knitted or woven from several material components of which at least one can be welded. The materials are woven or knitted at the areas which form a seam for welding in such a way that the thermoplastics component which is capable of being welded is present. As will be appreciated, this method is applicable only to specific types of materials and does not enable pure textile materials to be welded together.

DE A 3336536 discloses a method of attaching small pieces of textile material to larger pieces by pretreating the smaller pieces with a thermosensitive adhesive and effecting the thermal adhesure using heat, such as an iron.

The present invention seeks to overcome the above problems.

Accordingly, the present invention provides a method of bonding a first layer of fabric material to a second layer of fabric material using thermoplastics material as bonding material comprising applying a high-frequency electric current and characterised by laying one of said layers on the other with a layer of thermoplastics material therebetween, applying pressure to said layers at preselected zones in which said fabric layers are to be bonded together and applying the high-frequency electric current across said zones to cause the thermoplastics material to bond said fabric layers together.

The present invention enables the bonding of fabric to fabric and is even suitable for waterproof fabrics, e.g., silicone coated fabrics.

Preferably said thermoplastics material is a polyurethane film. Advantageously said film is polyetherurethane or Ployesterurethane film.

The polyurethane film may be a suitable polyester based or polyether based film. These have been available for many years but despite many attempts to provide fabric bonding, it has not been appreciated that these films can be used effectively and efficiently for this purpose.

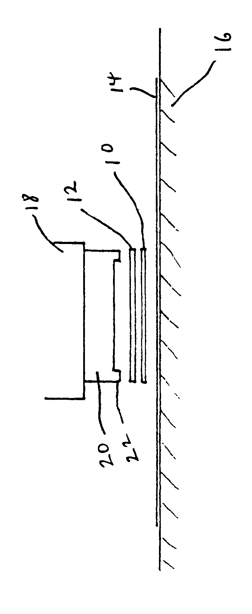

The present invention is further described hereinafter, by way of example, with reference to the accompanying drawing which is a diagrammatic view showing the bonding of an applique of fabric material to a fabric garment in accordance with the method of the present invention.

As is shown in the drawing, a sheet 10 of thermoplastics material is placed between the applique 12 and the fabric 14 of the garment to which the applique is to be bonded.

These are supported on a base 16 of a high-frequency welding machine whose welding head 18 carries a dye 20 with welding ledges 22 which correspond to the preselected zones of the applique 12 which are to be bonded to the fabric 14.

The base 16 and head 18 are electrodes of the welding machine which are connected to a high-frequency electric current generator. When the electrodes are brought together, trapping the applique 12 and fabric 14 between the base 16 and welding ledges 22 the heat generated by the high frequency current causes the thermoplastics material 10 to melt along the aforementioned zones, fusing the applique 12 and fabric 14 together.

It will be appreciated that a layer of foam or other suitable compressible material may be incorporated between the applique 12 and thermoplastics sheet 10 in order to provide a three-dimensional effect for the applique, as is well known, when the latter is bonded to the fabric 14.

One advantage of the method according to the present invention is that only one layer or sheet of thermoplastics material is required. When the high-frequency electric current is applied across the thermoplastics material at the aforementioned zones under pressure then the material is caused to melt and flow into the fabric layers to effect bonding.

## Claims

1. A method of bonding a first layer (12) of fabric material to a second layer (14) of fabric material using thermoplastics material as bonding material comprising applying a hight-frequency electric current and charaterised by laying one of said layers (12, 14) on the other (12, 14) with a layer of thermoplastics material (10) therebetween, applying pressure to said layers at preselected zones (22) in which said fabric layers are to be bonded together and applying the high-frequency electric current across said zones to cause the thermoplastics material to bond said fabric layers together.

2. A method as claimed in claim 1 wherein said first layer (12) of fabric material is an applique.

3. A method as claimed in claim 1 or 2 wherein said first and second layers (12, 14) of fabric material are bonded using only one layer (10) of thermoplastics material.

4. A method as claimed in any preceding claim wherein said thermoplastics material (10) is polyetherurethane film.

5. A method as claimed in any of claims 1 to 3 wherein said thermoplastics film (10) is polyesterurethane film.

6. Layers of fabric comprising a first layer (12) of fabric material, a second layer (14) of fabric material and a layer of thermoplastic material therebetween joined according to the method as claimed in any of the preceding claims.


**Ansprüche**

1. Verfahren zum Verbinden einer ersten Gewebemateriallage (12) mit einer zweiten Gewebemateriallage (14), wobei ein thermoplastisches Material als Verbindungsmaterial verwendet wird, und welches die Anlegung eines hochfrequenten elektrischen Stromes umfaßt und dadurch gekennzeichnet ist, daß eine der Lagen (12, 14) auf die andere (12, 14) und eine Lage thermoplastischen Materials (10) dazwischen gelegt wird, daß an vorbestimmten Bereichen (22), an denen die Gewebelagen miteinander verbunden werden sollen, Druck auf die Lagen ausgeübt und der hochfrequente elektrische Strom an diesen Bereichen angelegt wird, um durch das thermoplastische Material ein Verbinden der Gewebelagen miteinander zu verursachen.

2. Verfahren nach Anspruch 1, wobei die erste Gewebemateriallage (12) eine Applikation ist.

3. Verfahren nach Anspruch 1 oder 2, wobei die ersten und zweiten Gewebemateriallagen (12, 14) unter Gebrauch von lediglich einer Lage (10) thermoplastischen Materials verbunden werden.

4. Verfahren nach einem der vorangehenden Ansprüche, wobei das thermoplastische Material (10) eine Polyetherurethanfolie ist.

5. Verfahren nach einem der Ansprüche 1 bis 3, wobei die thermoplastische Folie (10) eine Polyesterurethanfolie ist.

6. Gewebelagen, die eine erste Gewebemateriallage (12), eine zweite Gewebemateriallage (14), und eine sich dazwischen befindende Lage aus thermoplastischem Material umfassen, und die nach dem in einem der vorangehenden Ansprüche beanspruchten Verfahren verbunden sind.


**Revendications**

1. Procédé de liaison d'une première couche (12) de tissu sur une seconde couche (14) de tissu en utilisant une matière thermoplastique comme matière de liaison comprenant le passage d'un courant électrique à haute fréquence et caractérisé en ce que l'on place l'une desdites couches (12, 14) sur l'autre (12, 14) avec une couche de matière thermoplastique (10) entre celles-là, on applique de la pression sur lesdites couches à des zones pré-sélectionnées (22) auxquelles lesdites couches de tissu doivent être liées ensemble et l'on fait passer le courant électrique à haute fréquence auxdites zones afin d'effectuer la liaison desdites couches de tissu ensemble au moyen de la matière thermoplastique.

2. Procédé selon la revendication 1, dans lequel ladite première couche (12) de tissu est une applique.

3. Procédé selon la revendication 1 ou 2, dans lequel lesdites première et seconde couches (12, 14) de tissu sont liées en utilisant une seule couche (10) de matière thermoplastique.

4. Procédé selon l'une quelconque des revendications précédentes, dans lequel ladite matière thermoplastique (10) est un film de polyétheruréthane.

5. Procédé selon l'une quelconque des revendications 1 à 3, dans lequel le film (10) thermoplastique est un film de polyesteruréthane.

6. Couches de tissu comprenant une première couche (12) de tissu, une seconde couche (14) de tissu et une couche de matière thermoplastique entre celles-là, jointes selon le procédé tel que revendiqué dans l'une quelconque des revendications précédentes.